# EUROPÄISCHE PATENTSCHRIFT

(11) **EP 2 087 258 B1**
(45) Veröffentlichungstag und Bekanntmachung des Hinweises auf die Patenterteilung: **19.01.2011**
(21) Anmeldenummer: 07822784.0
(22) Anmeldetag: 21.11.2007
(51) Int. Cl.: F16H 25/20, H02K 7/06, A47C 20/04

(54) **ELEKTROMOTORISCHER LINEARANTRIEB**
ELECTROMOTIVE LINEAR DRIVE
ENTRAÎNEMENT LINÉAIRE PAR MOTEUR ÉLECTRIQUE

(30) Priorität: 05.12.2006 DE 202006018505 U
(43) Veröffentlichungstag der Anmeldung: 12.08.2009
(73) Patentinhaber: Dewert Antriebs- und Systemtechnik GmbH, 32278 Kirchlengern (DE)
(72) Erfinder: ROITHER, Andreas, 32130 Enger (DE); MÜLLER, Christian, 32839 Steinheim (DE)
(74) Vertreter: Dantz, Jan Henning
(86) Internationale Anmeldenummer: PCT/EP2007/062646
(87) Internationale Veröffentlichungsnummer: WO 2008/068143

(56) Entgegenhaltungen:
- WO-A-2004/028305
- WO-A-2004/032684
- DE-A1- 4 340 078
- DE-A1- 10 030 140
- DE-A1-102004 023 243
- US-A1- 2001 015 581
- US-A1- 2005 011 291
- US-A1- 2005 109 139

## Beschreibung

Die Erfindung betrifft einen elektromotorischen Linearantrieb, insbesondere zum Verstellen von Bauteilen eines Möbels mit einem mehrteiligen, aus Kunststoff im Spritzgussverfahren gefertigten Gehäuse, mit wenigstens einem Antriebsmotor und mit mindestens einer rotierend antreibbaren Spindel, auf die jeweils eine gegen Verdrehung gesicherte, klotzartig ausgebildete Spindelmutter aufgesetzt ist, die das Gehäuse zumindest teilweise umgreift und/oder zumindest teilweise in das Gehäuse eingreift.

Der elektromotorische Linearantrieb ist in bevorzugter Ausführung ein sogenannter Einzelantrieb mit einem Antriebsmotor und mit einer rotierend antreibbaren Spindel. Der elektromotorische Linearantrieb wird eingesetzt, um beispielsweise das Rückenteil oder das Fußteil eines Lattenrostes oder die Rückenlehne und/oder das Fußteil eines Sessels zu verstellen.

Bei einem bekannten elektromotorischen Linearantrieb liegt die Spindel zwischen den beiden Schenkeln eines Hohlprofilschienenabschnittes. Dieser Hohlprofilabschnitt besteht aus Stahl. Dadurch ist es möglich, dass je nach dem Einsatzfall die Länge des Profilschienenabschnittes variiert werden kann. Daraus ergibt sich eine Typenvielfalt, die dazu führt, dass insbesondere beim Einsatz zum Verstellen der Rückenlehne eines Sessels der Antrieb aufgrund der relativ hohen Kosten nicht einsetzbar ist.

Zur Verstellung der Rückenlehne eines Sessels werden von den verschiedenen Herstellern aber baugleiche Beschläge eingesetzt. Daraus ergibt sich, dass ein einziger Hersteller der in Rede stehenden elektromotorischen Linearantriebe verschiedene Beschlaghersteller oder Sesselhersteller beliefern kann, ohne dass Varianten des elektromotorischen Linearantriebes notwendig sind. Da die in Rede stehenden elektromotorischen Linearantriebe zum Verstellen der Bauteile eines Sessels als Massenprodukte anzusehen sind, wird von den einschlägigen Verwendern gefordert, dass diese elektromotorischen Linearantriebe äußerst preiswert zu beziehen sind.

Aus der gattungobildenden DE 10 2004 023 243 A 1 ist ein elektromotorischer Linearantrieb, insbesondere ein Möbelantrieb bekannt, der mit einem Antriebsmotor, einem damit gekoppelten Drehzahlreduziergetriebe, einer rotierend antreibbaren Spindel ausgestattet ist, die mindestens einen Lagersitz aufweist. Auf die Spindel ist eine gegen Verdrehung gesicherte sowie in Spindellängsrichtung verfahrbare Spindelmutter aufgesetzt. Der Bewegung der Spindelmutter folgt das Abtriebsglied des Linearantriebes, welches als Hubrohr ausgebildet ist. Das freie Ende des Hubrohres trägt ein Anschlussteil und das Hubrohr ist von einem Flanschrohr umgeben. Ferner enthält der Linearantrieb ein Getriebegehäuse und ein dem Anschlussteil gegenüberliegendes Gegenlager. Die funktionsgebundenen Bauteile des Linearantriebes sind als einstückige Kunststoffformteile ausgebildet. So bildet das Gegenlager, das Getriebegehäuse und das Flanschrohr ein einstückiges Kunststoffformteil. Außerdem ist das Abtriebsteil des Drehzahlreduziergetriebes und die Spindel einschließlich des Lagersitzes als ein einstückiges Kunststoffformteil ausgebildet. Ferner bildet das Anschlussteil, die Spindelmutter und das Hubrohr als Alternativlösung ein einstückiges Kunststoffformteil.

Aus der WO 2004/028305 A1 ist ein elektromotorischer Möbelantrieb bekannt, der mit mindestens einem Antriebsmotor und mit mindestens einer Spindel und wenigstens einer Spindelmutter ausgestattet ist. Die Spindel bzw. die Spindeln und die Spindelmutter bzw. die Spindelmuttern sind in einem Gehäuse angeordnet, welches durch einen durchgehenden Profilschienenabschnitt gebildet ist. Der Antriebsmotor steht derart zu diesem Profilschienenabschnitt, dass der Abtriebszapfen durch den Profilschienenabschnitt hindurchgeführt ist oder außerhalb des Profilschienenabschnittes steht.

Alternativ kann auch der Antriebsmotor innerhalb des Profilschienenabschnittes montiert sein. Die antriebstechnische Verbindung zwischen jeder Spindel ist durch eine die Motordrehzahl herabsetzende Getriebeeinheit mit sich kreuzenden, schneidenden oder parallelen Achsen gebildet.

Der Erfindung liegt die Aufgabe zugrunde, einen elektromotorischen Linearantrieb der eingangs näher beschriebenen Art so zu gestalten, dass der konstruktive Aufbau äußerst einfach ist, der darüber hinaus zum Einbau insbesondere in einen Sessel kompakt und darüber hinaus preiswert aus möglichst wenig Bauteilen herzustellen ist.

Die gestellte Aufgabe wird gelöst, indem das Gehäuse aus zwei Gehäuseteilen besteht und Gleitbahnen für die Spindelmutter aufweist, dass zumindest die Gewindegänge der Spindel außerhalb des Gehäuses angeordnet sind, dass die Gehäuseteile im Querschnitt gleich oder ähnlich und vorzugsweise schalenförmig gestaltet sind, dass die Trennebene des Gehäuses entlang der Mittellängsachse der Spindel verläuft, und dass, bezogen auf die Montagestellung des Linearantriebes, die Trennebene vertikal steht.

Da nunmehr das Gehäuse, vorzugsweise außenseitig Gleitbahnen für die Spindelmutter aufweist, ist das Gehäuse äußerst einfach aufzubauen, da keine konstruktiven Maßnahmen notwendig sind, um innerhalb des Gehäuses Funktionsteile anzuordnen. Im Wesentlichen beschränkt sich die Funktion des Gehäuses auf die Lagerfunktion der Spindel, auf die Aufnahmefunktion des Getriebes und auf die Führungsfunktion der Spindelmutter, so dass das Gehäuse auch als Führungskörper bezeichnet werden könnte. Da die Spindel nunmehr außerhalb des Gehäuses angeordnet ist, wird eine äußerst kompakte Bauweise erreicht, insbesondere ist die Bauhöhe zumindest im Bereich der Spindel äußerst gering. Der Antriebsmotor ist vorzugsweise ein Antriebsgetriebemotor, wobei das Getriebe fest oder lösbar mit dem Antriebsmotor verbunden ist. Außerhalb des Gehäuses befinden sich zumindest die Gewindegänge, die beim Verfahren der Spindelmutter mit deren Gewindegängen in Eingriff kommen.

Die Montage ist einfach, da das Gehäuse aus zwei Gehäuseteilen gebildet ist, die im Querschnitt gleich oder ähnlich gestaltet sind und die vorzugsweise schalenförmig ausgelegt sind. Darüber hinaus wird der Vorteil erreicht, dass gegebenenfalls benötigte Funktionsteile in einfachster Weise innerhalb des Gehäuses montiert werden können. Durch die schalenförmige Gestaltung wird darüber hinaus eine relativ hohe Eigensteifigkeit erreicht. Darüber hinaus; liegt die Trennebene des Gehäuses bzw. die Kontaktflächen unterhalb der Spindel und verduft, bezogen auf die Montagestellung senkrecht. Dabei liegt die Trennebene entlang der Mittellängsachse der Spindel.

In einer ersten, bevorzugten Ausführung ist vorgesehen, dass das Gehäuse, bezogen auf die Montagestellung des Linearantriebes, sich über den Bereich unterhalb der Spindel erstreckt. Dadurch kann zum Antrieb der Spindel das übliche, als Normteil anzusehende Drehzahlreduziergetriebe verwendet werden, welches üblicherweise ein Schneckentrieb ist.

In weiterer Ausgestaltung ist vorgesehen, dass die Gleitbahnen sich zumindest über den Bewegungsbereich der Spindelmutter erstrecken, und dass das Gehäuse am freien, dem Getriebemotor abgewandten Ende eine Ausformung zur Lagerung des freien Endes der Gewindespindel aufweist. Dadurch ist es möglich, dass die Gewindespindel an beiden Enden gelagert wird, so dass eine Auslenkung der Gewindespindel durch die beim Verfahren der Spindelmutter auftretende Belastung verhindert wird.

Zur Lagerung der Gewindespindel ist in einfachster Ausführung vorgesehen, dass das freie Ende der Gewindespindel in einem Lagersitz der Ausformung des Gehäuses gelagert ist. Alternativ dazu ist es jedoch auch möglich, dass das freie Ende der Gewindespindel in einem in eine Bohrung der Ausformung des Gehäuses aufgesetzten Gleitlager gelagert ist. Das Gleitlager bietet den Vorteil, dass es aus einem geeigneten Werkstoff, beispielsweise aus einem Buntmetall gefertigt werden kann. Dadurch wäre eine günstige Werkstoffkombination der aus Stahl bestehenden Gewindespindel und dem Gleitlager möglich.

Gemäß einer anderen Ausführungsform ist der freie Endbereich der Spindel als Gleitlager ausgeformt oder weist ein fest mit der Gewindespindel verbundenes Gleitlager auf. Die zuvor genannten Lager zur Lagerung des freien Endes der Spindel sind vorzugsweise als Gleitlager ausgebildet, können aber auch als Wälzlager ausgebildet sein, wobei lose und/oder feste Lagerungen denkbar sind. Damit die Spindelmutter die auftretenden Kräfte zur Verstellung eines Möbelteils übertragen kann, ist vorgesehen, dass sie als Hohlkörper ausgebildet ist und eine mittig zwischen den Längskanten liegende Innengewindehülse aufweist, deren Gewindegänge mit der Gewindespindel in Eingriff stehen und dass die einzelnen Hohlräume durch gitterförmig angeordnete Versteifungsrippen gebildet sind, die sich in Längs- und Querrichtung der Spindelmutter erstrecken. Außerdem wird durch diese Gestaltung eine materialsparende Ausführung erreicht.

Eine konstruktiv einfache Verbindung zwischen der Spindelmutter und dem Gehäuse ist gegeben, wenn die Spindelmutter mit dem Gehäuse derart formschlüssig verbunden ist, dass die Spindelmutter gegenüber dem Gehäuse verschiebbar geführt und/oder gelagert ist. Für die Verbindung sind dann keine zusätzlichen Teile notwendig, die beispielsweise durch mechanische Verbindungselemente an einem oder an beiden Bauteilen angebracht werden müssten. Diese formschlüssige Verbindung wird durch die entsprechende Gestaltung der Spindelmutter und des Gehäuses erreicht. Durch die beiden Gehäuseteile wird dann nach dem Zusammenbau die formschlüssige Verbindung erreicht.

In besonders einfacher Weise wird die formschlüssige Verbindung zwischen der Spindelmutter und dem Gehäuse durch parallel und im Abstand zueinander verlaufende Führungsnuten und darin eingreifenden Führungsstegen gebildet. Die Abmessungen der Führungsnuten und der Führungsstege sind so aufeinander abgestimmt, dass die formschlüssige Verbindung mit einem definierten Spiel anzusehen ist.

Es ist ferner zur einfachen Montage noch vorgesehen, dass in mindestens einem Gehäuseteil des Gehäuses eine Führungsnut und/oder ein Führungssteg vorgesehen ist, und dass demzufolge die Spindelmutter Führungsstege und/oder Führungsnuten aufweist.

Wie bereits eingangs ausgeführt, erfolgt die Verstellung eines gekoppelten Möbeltauteiles mittels eines Beschlages der mit der Spindelmutter gekoppelt ist. Zur Verbindung der Spindelmutter mit dem als Normteil anzusehenden Beschlag ist dann vorgesehen, dass an den Längsseiten der Spindelmutter Anschlusslaschen als Eingangsglied eines Verstellbeschlages des Möbels vorgesehen sind. Zur Ausrüstung des Möbels mit dem Linearantrieb ist dann für den Möbelhersteller kein nennenswerter Aufwand notwendig.

Es ist ferner vorgesehen, dass an der dem Gehäuse abgewandten Seite ein die Spindel abdeckender Abdeckstreifen vorgesehen ist. Dieser Abdeckstreifen hat mindestens zwei Funktionen, nämlich vom Design her wirkt er als Sichtschutz, da er die Spindel abdeckt. Da es in Räumen unvermeidbar ist, dass auch Staub aufgewirbelt wird, dient er darüber hinaus als Staubschutz, so dass in die Gewindegänge der Spindel und der Spindelmutter zumindest das Eindringen von Staubpartikeln erschwert wird. Um eine optimale Wirkung zu erzielen, ist vorgesehen, dass dieser Abdeckstreifen die Spindel beidseitig überragt.

Das Abtriebsglied des Drehzahlreduziergetriebes ist in bevorzugter Ausführung ein Rotationskörper, beispielsweise das Schneckenrad eines Schneckentriebes. Bei dieser Ausführung ist dann noch vorgesehen, dass der Rotationskörper mit einer Innengewindebohrung versehen ist, deren Gewindegänge mit den Gewindegängen der Gewindespindel in Eingriff stehen.

Zur festen Verbindung des Rotationskörpers mit der Gewindespindel ist in einfachster Weise vorgesehen, dass die Gewindespindel mit dem Rotationskörper durch in Längsrichtung der Gewindespindel sich erstreckende Stifte verbunden ist. Zweckmäßigerweise erfolgt diese Verbindung durch zwei einander diametral gegenüberliegende Stifte.

Gemäß einer anderen Ausführung ist auch noch vorgesehen, dass der Rotationskörper mit der Gewindespindel durch eine Kupplung oder durch Kupplungselemente verbunden ist.

Die beiden Endlagen der Spindelmutter können in an sich bekannter Weise durch Endschalter begrenzt werden. Eine konstruktiv einfachere Lösung ist jedoch, wenn die Spindelmutter in den Endlagen an ortsfeste, mechanische Anschläge anläuft und dass beim Überschreiten eines bestimmten Wertes des Motorstromes der Motor abgeschaltet wird, wobei ein Überstromrelais oder eine Poly-Switch-Sicherung den Antriebsmotor abschaltet.

Es ist ferner vorgesehen, dass die beiden Gehäuseteile des Gehäuses an der der Spindelmutter zugewandten Seite mit quer zur Spindel verlaufenden Versteifungsrippen versehen ist. Alternativ sind jedoch auch die Wände mit Rippen versehen, da dadurch eine größtmögliche Sicherheit gegen Verwindung erreicht wird, wobei der Materialeinsatz minimiert ist.

Es sind bei dem in Rede stehenden Linearantrieb mechanische Befestigungselemente unvermeidbar. Es ist deshalb vorgesehen, dass zumindest die Gehäuseteile des Linearantriebes mit lagegerecht angeordneten Taschen versehen sind. In diese Taschen können beispielsweise Muttern, Schrauben, Gewindeeinsätze und ähnliche Teile form- und/oder kraftschlüssig festgesetzt werden.

In konstruktiver Ausgestaltung des elektromotorischen Linearantriebes ist das Gehäuse jedoch auch ablängbar ausgebildet, so dass bei Bedarf an geringen Stückzahlen das Gehäuse in Länge veränderbar ist, ohne dass Änderungskosten des Spritzgießwerkzeuges anfallen. Weiterhin weist das Gehäuse des elektromotorischen Linearantriebes an seiner außen und/oder Innenseite eine Verzahnung auf, in welche Verbindungselemente eingreifen können, um beispielsweise ein abgelängtes Gehäuse mit einem weiteren Gehäuse beispielsweise mit einer Endkappe zu verbinden. Dabei kann die Endkappe mehrteilig ausgebildet sein und ein Lager für das freie Ende der Gewindespindel aufweisen und zumindest abschnittsweise in die Verzahnung des Gehäuses eingreifen.

Das Gehäuse des elektromotorischen Linearantriebes weist nach der Montage weiterhin einen Innenraum auf, in welchem die elektrische Verdrahtung der einzelnen Komponenten der elektrischen Bauteile wie Motor und Endlagenschalter untergebracht sind.

Die Endlagenschalter sind zumindest in einem Gehäuseteil vorzugsweise fest eingesetzt. Eine andere Ausführungsform sieht jedoch vor, dass die Position zumindest eines Endlagenschalters variabel ausgebildet ist. Hierzu können stufenlose Stellmittel wie KJemm- oder Schraubelemente verwendet werden. Eine andere Ausführungsform sieht jedoch formschlüssige Abschnitte vor, in welche der jeweilige Endlagenschalter einsetzbar ist. Diese formschlüssigen Abschnitte können Stufen aufweisen, so dass der jeweilige Endlagenschalter stufenweise versetzt werden kann. Auf diese Weise kann Einfluss auf den Bewegungsbereich der Spindelmutter genommen werden. In einer weiteren Ausbildungsform weist zumindest ein Endlagenschalter eine Art Einfassung auf, in die er eingesetzt ist, die dann wiederum in das Gehäuse eingesetzt ist und stufenlos oder gemäß der formschlüssigen Abschnitte in Stufen gemeinsam mit dem Endlagenschalter versetzt werden kann.

Wie eingangs näher beschrieben, ist das Gehäuse des elektromotorischen Linearantriebes aus einem Kunststoff hergestellt, das fertigungsbedingt hohe Toleranzen oder unter mechanischer Belastung hohe Verformungen aufweisen kann. Zur sicheren Endlagenabschaltung ist deshalb vorgesehen, dass zumindest ein Endlagenschalter mit einem Betätigungselement versehen ist, das den jeweiligen Endschalter betätigt und welches von der Spindelmutter betätigt wird. In einer anderen Ausführungsform ist jedoch das Betätigungselement als eine Art Schieber ausgebildet und ist direkt an Stegen und/oder Flächen des Gehäuses entlang dem Bewegungsbereich der Spindelmutter exakt geführt. Dabei weist der Schieber eine Mitnahmeeinrichtung auf und ist über diese mit der Spindelmutter formschlüssig gekoppelt, so dass die Mitnahmeeinrichtung sowohl Form- und Lagetoleranzen bei mechanischer Belastung der Bauteile als auch Fertigungstoleranzen ausgleichen kann.

In einer weiteren Ausführungsform des elektromotorischen Linearantriebes weist die Spindel eine hohe Steigung auf, so dass die Spindel als nicht selbstgehemmt zu sein scheint. Gemäß dieser Ausführungsform können Bremsmittel vorgesehen sein, welche mit der Gewindespindel oder mit dem Motor antriebstechnisch gekoppelt sein können. Die Bremsmittel können nach Art einer Schlingfeder ausgebildet sein und um einen zylindrischen Ansatz gewickelt sein, welcher rotierend und synchron mit der Gewindespindel oder der Motorwelle antriebstechnisch gekoppelt ist, so dass zumindest in einer Bewegungsrichtung der Spindelmutter die Gewindespindel selbstgehemmt zu sein scheint.

Anhand der beiliegenden Zeichnungen wird die Erfindung noch näher erläutert.

Es zeigen:

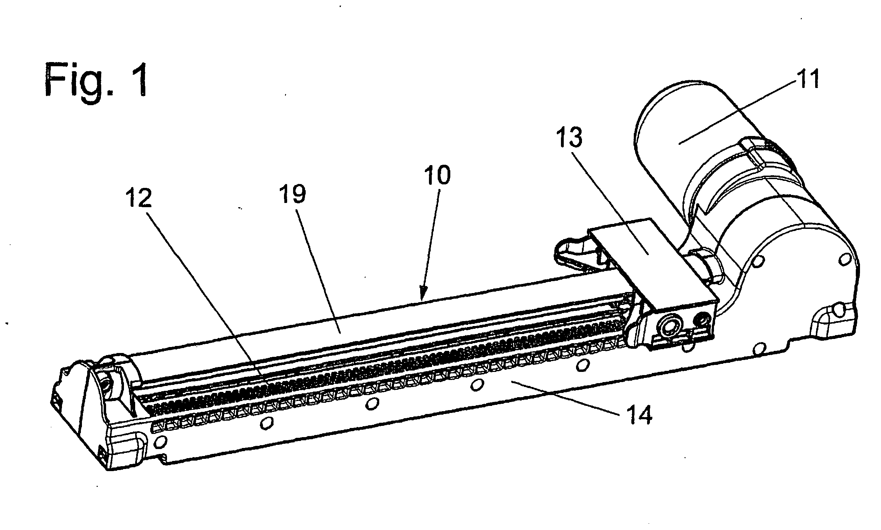

- Figur 1: einen erfindungsgemäßen elektromotorischen Linearantrieb in perspek- tivischer Darstellung,
- Figur 2: einen Vertikalschnitt quer zur Längsrichtung der Spindel,
- Figur 3: den Linearantrieb gemäß der Figur 1 in einer sprengbildlichen Darstel- lung,
- Figur 4: den dem Antriebsmotor zugeordnete Bereich des Linearantriebes in sprengbildlicher Darstellung und
- Figur 5: den dem Antriebsmotor abgewandt liegenden Bereich des Linearan- triebes in einer sprengbildlichen Darstellung
- Figur 6: der dem Antriebsmotor abgewandte Endbereich des Linearantriebes in einer weiteren Ausführung in perspektivischer Darstellung.

Der in den Figuren dargestellte elektromotorische Linearantrieb 10 ist insbesondere für den Einbau in einen Sessel ausgelegt, um mittels eines nicht dargestellten Beschlages die verstellbaren Möbelbauteile zu bewegen. Der elektromotorische Linearantrieb 10 ist mit einem Antriebsmotor 11 in Form eines Gleichstrommotors ausgerüstet, der mit einem Drehzahlreduziergetriebe verbunden ist, wie noch näher erläutert wird. Über dieses Drehzahlreduziergetriebe wird eine Spindel 12 angetrieben, auf die eine Spindelmutter 13 aufgesetzt ist, die gegen Verdrehung gesichert ist, und ausschließlich in Längsrichtung der Spindel 12 verfahrbar ist. Der Linearantrieb 10 enthält außerhalb ein langgestrecktes Gehäuse 14, dessen Endbereiche so gestaltet sind, dass an der dem Antriebsmotor 11 zugewandten Seite das Drehzahlreduziergetriebe montiert werden kann, und dass an dem gegenüberliegenden Endbereich das freie Ende der Spindel 12 gelagert ist.

Weiterhin ist das langgestreckte Gehäuse 14 derart geformt, dass es feste mechanische Endanschläge aufweist, die zwischen den Endbereichen des Gehäuses 14 gebildet sind. Hierzu ist dem jeweiligen Endbereich eine Abstufung zugeordnet, die an das jeweilige Ende der Führungsnuten 15, 16 angeformt ist.

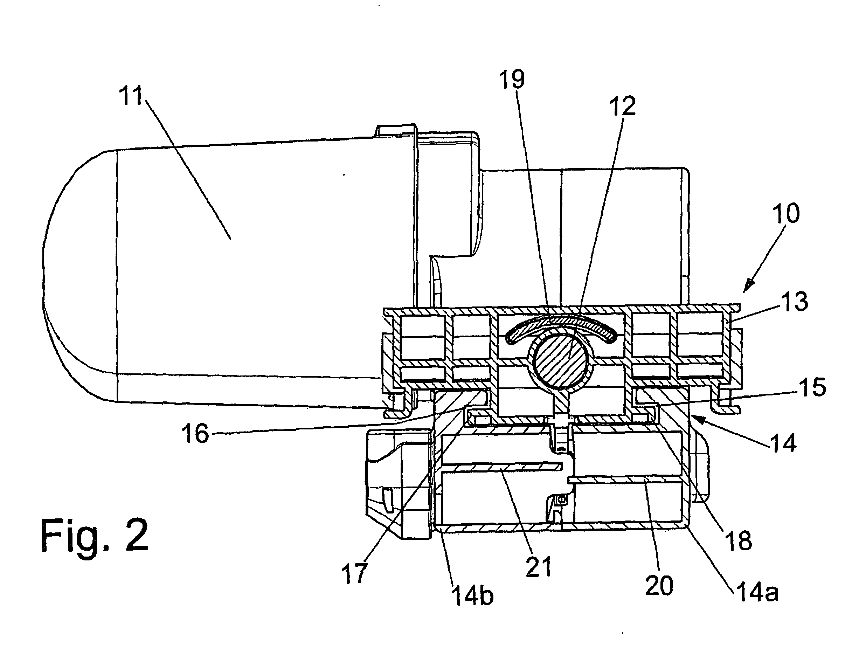

Die Figur 2 zeigt, dass das Gehäuse 14 in dem der Spindel 12 zugeordneten Bereich so gestaltet ist, dass die Spindel 12 außerhalb des Gehäuses 14 liegt. Ferner zeigt diese Figur, dass die Höhe des Gehäuses 14 in diesem Bereich relativ gering ist und in etwa der Höhe der Spindelmutter 13 entspricht, so dass die Gesamthöhe sich aus den Höhen des Gehäuses und der Spindelmutter ergibt. Die Spindelmutter 13 ist als Hohlkörper ausgebildet und mit einer mittig zwischen den Längsseiten liegenden Gewindebohrung versehen, deren Gewindegänge mit denen der Spindel 12 in Eingriff stehen.

Die einzelnen Hohlräume der Spindelmutter 13 sind durch an sich gitterförmig angrenzende Versteifungsrippen gebildet, welches ich in Längs- und Querrichtung der Spindelmutter 13 erstrecken.

Die Figur 2 zeigt deutlich, dass die Spindelmutter 13 durch Gleitflächen des Gehäuses 14 geführt ist. Dazu ist in jedem Gehäuseteil 14a, 14b des Gehäuses 14 eine Führungsnut 15, 16 vorgesehen, die sich in Längsrichtung der Spindel 12 erstreckt. In diese Führungsnuten 15, 16 greifen Führungsstege 17, 18 der Spindelmutter 13 ein. Im Gegensatz zu der gezeichneten Ausführung liegen die kontaktierenden Flächen der Führungsnuten 15, 16 und der Führungsstege 17, 18 aneinander. Darüber hinaus könnten auch die oberen Flächen der Längskantenbereiche des Gehäuses 14 als Gleitflächen dienen. Ferner zeigt diese Figur, dass an dem der Spindelmutter 13 zugewandten Seite das Gehäuse als Winkelstiege ausgebildet ist, so dass die aufeinander zu gerichteten Stege des Gehäuses 14 Führungsstege für die Spindelmutter 13 bilden.

Darüber hinaus zeigt die Figur 2, dass die Spindel 12 durch einen sich in Längsrichtung erstreckenden Abdeckstreifen 19 abgedeckt ist, der an der dem Gehäuse 14 abgewandten Seite liegt. Dieser Abdeckstreifen ist mit den erhöhten Endbereichen des Gehäuses 14 fest verbunden. Ferner zeigt die Figur 2, dass die Spindelmutter 13 im Querschnitt gitterartig gestaltet ist. Darüber hinaus zeigt auch noch die Figur, dass jedes Gehäuseteil 14a, 14b mit jeweils einer die Stabilität erhöhenden Verrippung 20, 21 versehen ist.

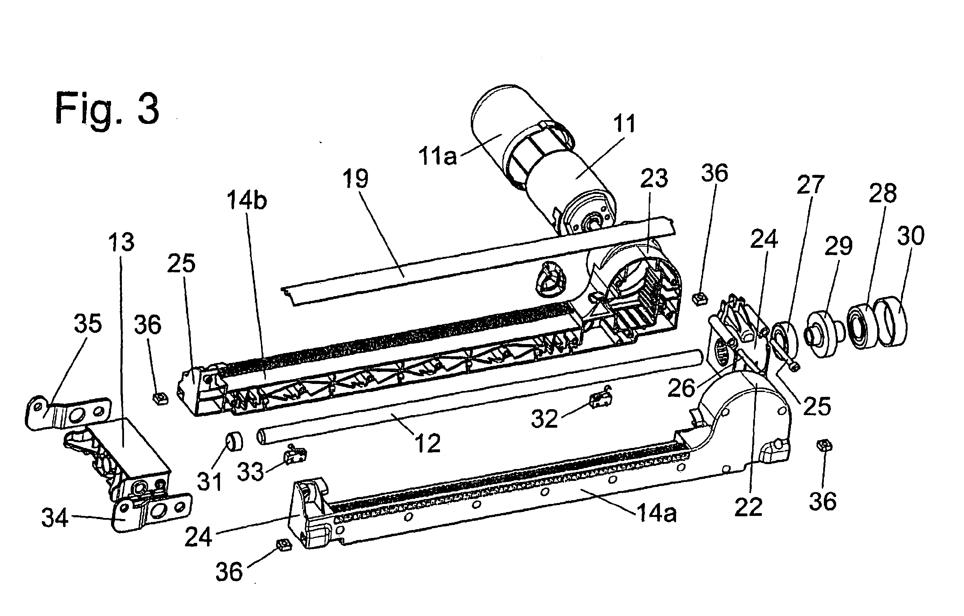

Die Figur 3 zeigt, dass der Antriebsmotor 11 in einem Gehäuse 11a eingesetzt ist. Ferner zeigt diese Figur, dass die Gehäuseteile 14a, 14b an den dem Antriebsmotor 11 zugewandten Endbereichen halbkreisförmige Ausformungen 22, 23 und an den gegenüberliegenden Endbereichen Ausformungen 24, 25 aufweisen. Die Ausformungen 22, 23 sind so ausgelegt, dass ein Getriebegehäuse 24 darin eingesetzt werden kann. Dieses Getriebegehäuse kann schließend und formschlüssig in die Ausformungen 22, 23 eingesetzt werden und jedoch auch über Schrauben 25, 26 und lagegerecht dazu angeordnete Gewindebohrungen mit dem Antriebsmotor 11 verbunden werden. In das Getriebegehäuse sind endseitig zwei Wälzlager 27, 28 eingesetzt, in die Zapfen eines Schneckenrades 29 gelagert sind. Das Schneckenrad 29 steht in nicht näher dargestellter Weise mit einer Schnecke in Eingriff. Diese Schnecke und das Schneckenrad 29 bilden das Drehzahlreduziergetriebe. Andere Getriebeformen sind jedoch auch denkbar. Durch das Bezugszeichen 30 ist noch ein Distanzring bezeichnet, der das äußere Wälzlager 28 fixiert.

Das freie Ende der Spindel 12 ist im dargestellten Ausführungsbeispiel mittels einer Gleitlagerbuchse 31 gelagert, die in eine entsprechende Bohrung der Ausformungen 24, 25 eingesetzt und drehfest mit der Spindel 12 verbunden ist. Im Gegensatz zu der dargestellten Ausführung könnte das freie Ende der Gewindespindel 12 auch in einer entsprechenden Bohrung der Ausformungen 24, 25 direkt gelagert sein.

Die Figur 3 zeigt ferner, dass die Endstellungen der Spindelmutter 13 durch zwei Endschalter 32, 33 begrenzt werden, die innerhalb des Gehäuses 14 montiert sind. Anstelle von Endschaltern könnten auch ortsfeste Anschläge vorgesehen sein, gegen die die Spindelmutter 13 anläuft. Da dadurch der vom Antriebsmotor 11 aufgenommene Strom sich erhöht, könnte dies zum Abschalten des Antriebsmotors 11 durch ein Überstromrelais oder durch eine Poly-Switch-Sicherung führen. Die Figur 3 zeigt darüber hinaus, dass innenseitig die Gehäuseteile 14a verrippt sind. Gleiches gilt auch für die der Spindelmutter zugewandte obere Seite, die mit quer zur Spindellängsachse 12 verlaufenden Verrippungen versehen ist.

Die Figur 3 zeigt ferner, dass an den Längsseiten der Spindelmutter 13 zwei Anschlusslaschen 34, 35 angesetzt sind, die das Eingangsglied des nicht näher dargestellten Beschlages darstellen. Die Anschlusslaschen 34, 35 sind mit Bohrungen versehen, die auf Ansätze der Spindelmutter 13 aufgesetzt werden. Durch entsprechende Sicherungselemente werden sie gegen ein Herausziehen gesichert. In nicht näher dargestellter Weise sind innerhalb des Gehäuses 14 Taschen zur Festlegung von Verbindungselementen vorgesehen, wie durch die Muttern 35 angedeutet ist.

Jede Tasche ist mit einem rastenden oder zumindest mit einem klemmenden Abschnitt versehen, so dass die Muttern 35 in der jeweiligen Tasche gehalten werden. Die Muttern 35 können als Vierkantmuttern ausgebildet sein. Die Taschen sind sowohl in Längs- als auch in Querrichtung größer als die Außenflächen der Muttern 35, so dass diese sich in Grenzen versetzen können, um einen Toleranzausgleich des Lochbildes des Möbelgestells vornehmen zu können. Mittels der Muttern 35 kann der elektromotorische Linearantrieb 10 an ein festes oder an ein bewegliches Möbelbauteil angesetzt werden.

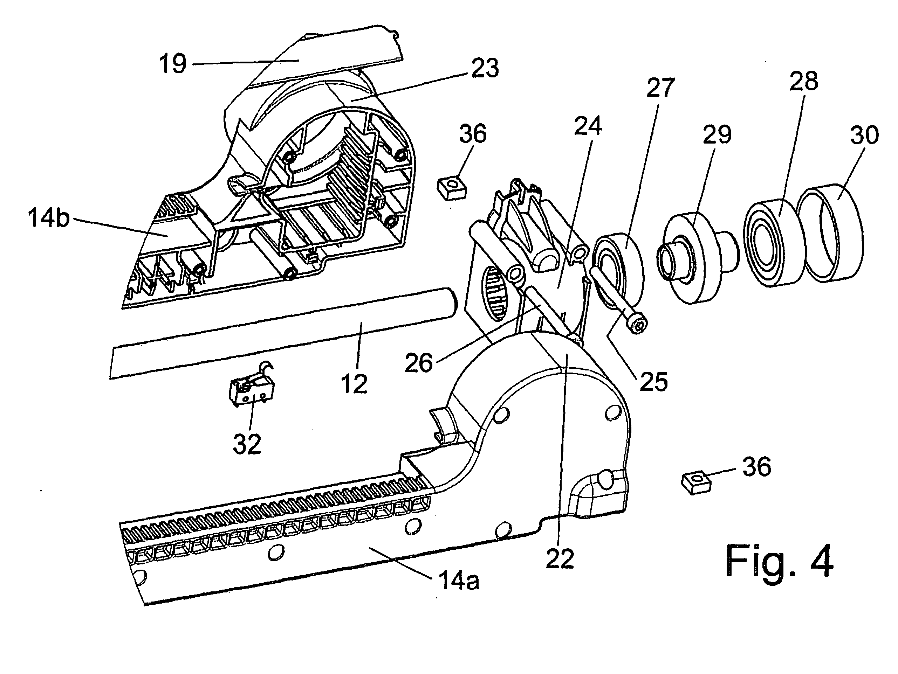

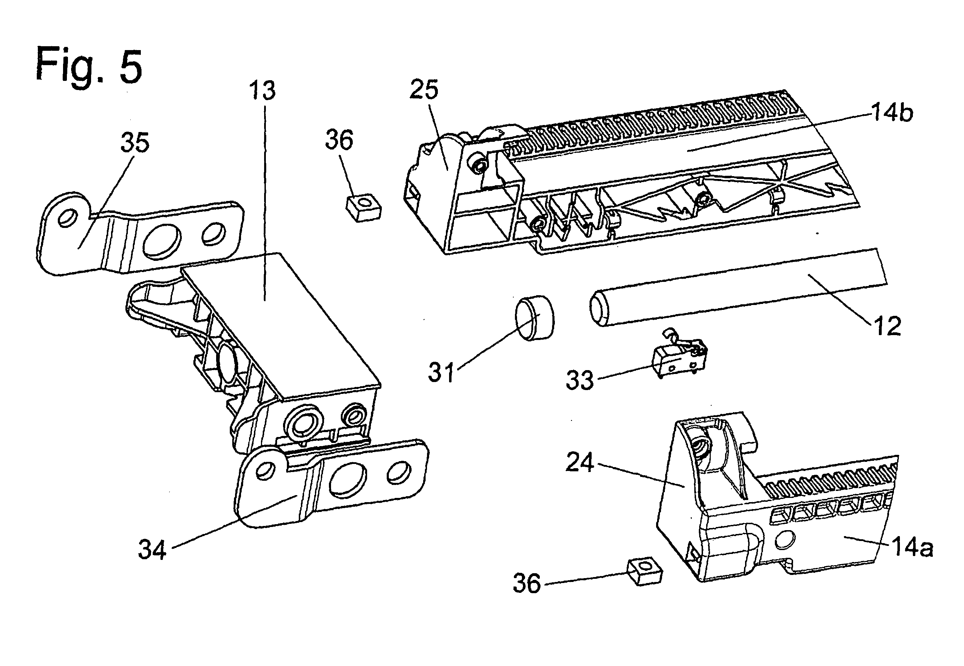

Die Figuren 4 und 5 zeigen die Endbereiche in gegenüber der Figur 3 vergrößerter Darstellung.

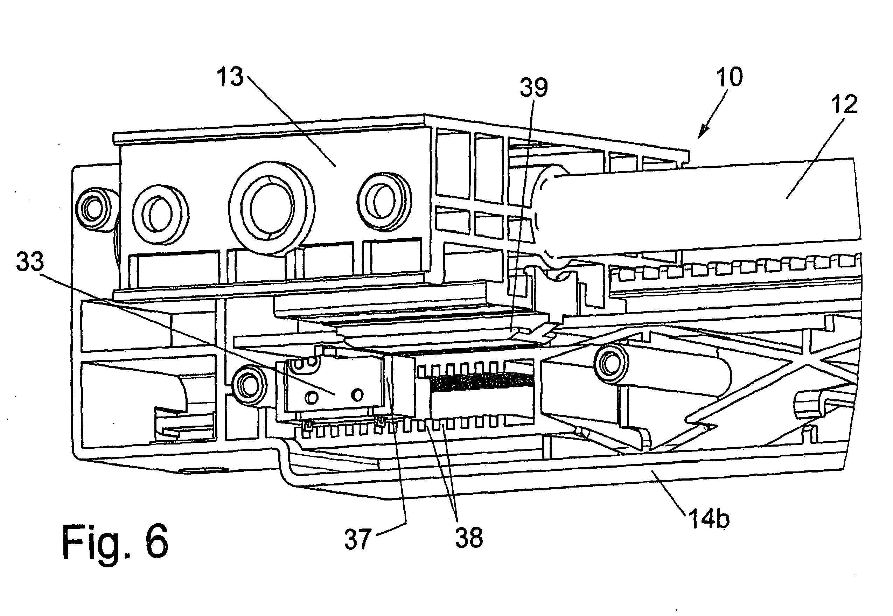

Die Figur 6 zeigt eine Teilansicht des elektromotorischen Linearantriebs 10 in einer räumlichen Ansicht, wobei das Gehäuseteil 14a entfernt ist. Das Gehäuseteil 14b weist im Bereich des Endschalters 33 einen Abschnitt zum Festlegen einer Einfassung 37 auf, wobei der Endschalter 33 in die rahmenförmige Einfassung 37 eingesetzt ist. Gemäß dieser Ausführung kann der Endschalter 33 gemeinsam mit der rahmenförmigen Einfassung 37 gemäß der stufig ausgebildeten Stege 38 versetzt werden, um eine Feinjustierung des Schaltpunktes des Endschalters 33 vorzunehmen. Der Endschalter 33 wird gemäß dieser Figur 6 von der Spindelmutter 13 nur indirekt betätigt. Mit der Spindelmutter 33 ist ein Betätigungselement nach Art eines Schiebers 39 beweglich, jedoch in Längsrichtung der Gewindespindel 12 fest verbunden und über eine nicht dargestellte Mitnahmeeinrichtung mit der Spindelmutter 13 gekoppelt. Die Mitnahmeeinrichtung soll nicht näher erläutert werden, kann jedoch auch Raststege aufweisen und zur leichteren Montage mit der Spindelmutter 13 verrastet, vorzugsweise gelenkig verrastet sein.

Der Schieber 39 ist an den Gehäuseteilen 14a, 14b geführt und weist Betätigungsrampen auf, welche bei Erreichen der Spindelmutter 13 in der jeweiligen Endlage den Stößel des Endschalters 33 betätigen, so dass der Stromfluss zum Antriebsmotor 11 unterbrochen wird, woraufhin der elektromotorische Linearantrieb 10 stillgesetzt ist.

Anhand der Figur 6 ist beispielhaft eine mögliche Ausführung zum stufenweisen Versetzen des Endlagenschalters 33 gezeigt, ebenso kann auch das Gehäuse 14b im Bereich des Endlagenschalters 32 Stege 38 zur Aufnahme der rahmenförmigen Einfassung 37 aufweisen.

Gemäß einer anderen, jedoch nicht dargestellten Ausführungsform, kann die rahmenförmige Einfassung 37 mit mindestens einem Gehäuseteil 14a, 14b kraftschlüssig verbunden, beispielsweise verschraubt sein.

Gemäß einer weiteren und ebenfalls nicht näher dargestellten Ausführungsform ist die Einfassung 37 mit Durchbrüchen oder Vorsprüngen versehen, welche mit äußeren Abschnitten des Endschalters 32 oder 33 korrespondieren. Die Endschalter 32, 33 weisen dazu Bohrungen oder abstehende Abschnitte auf, beispielsweise der elektrischen Anschlüsse. Die elektrischen Anschlüsse können durch die Durchbrüche geführt sein, so dass der jeweilige Endschalter 32, 33 fest mit der Einfassung 37 verbunden ist. Da die Einfassung 37 mehrere Durchbrüche aufweist, kann der jeweilige Endschalter 32, 33 an unterschiedlichen Orten der Einfassung gesteckt sein, so dass er versetzbar ist. Gemäß dieser Ausführung ist ferner noch vorgesehen, dass die Einfassung 37 verdrehsicher und relativ zum Gehäuseteil 14a, 14b unversetzbar angesetzt werden kann, während der Endlagenschalter 32 relativ zu der Einfassung 37 in Stufen oder stufenlos versetzbar angeordnet werden kann.

In einer weiteren ebenfalls nicht dargestellten Ausführungsform ist vorgesehen, dass jeder Endschalter 32, 33 in einen Halter festgesetzt werden kann, dessen Wandung an der dem Stößel abgewandten Seite mit wenigstens einem Langloch oder mit einer Lochreihe versehen ist. Sofern die Wandung mit einer Lochreihe versehen ist, können an dem Endschalter 32, 33 zwei Laschen angesetzt oder angeformt sein, die in zwei Löcher der Lochreihe eingesteckt werden. Es sind dann keine weiteren Sicherungselemente notwendig. Insofern die Wandung mit einem Langloch versehen ist, ist eine stufenlose Verstellung des Endschalters 32 oder 33 möglich. Es muss jedoch dann eine zusätzliche Sicherung, beispielsweise eine Klemmschraube vorgesehen sein, damit sich der Endschalter 32, 33 beim Betrieb des Linearantriebes nicht verschiebt.

Die Erfindung ist ferner noch auf ein Möbel, beispielsweise auf einen Lattenrost oder ein Bett oder einen Sessel gerichtet, welche mit dem vorstehend beschriebenen Linearantrieb ausgestattet sind.

## Patentansprüche

1. Elektromotorischer Linearantrieb (10), insbesondere zum Verstellen von Bauteilen eines Möbels, mit einem aus Kunststoff im Spritzgussverfahren gefertigten Gehäuse (14), einem Antriebsmotor (11, 29) und mit mindestens einer rotierend antreibbaren Spindel (12), auf die jeweils eine gegen Verdrehung gesicherte, klotzartig ausgebildete Spindelmutter (13) aufgesetzt ist, die das Gehäuse (14) zumindest teilweise umgreift und/oder zumindest teilweise in das Gehäuse eingreift, **dadurch gekennzeichnet, dass** das Gehäuse (14) aus zwei Gehäuseteilen (14a, 14b) besteht und Gleitbahnen für die Spindelmutter (13) aufweist, dass zumindest die Gewindegänge der Spindel (12) außerhalb des Gehäuses (14) angeordnet sind, dass die Gehäuseteile (14a, 14b) im Querschnitt gleich oder ähnlich und vorzugsweise schalenförmig gestaltet sind, dass die Trennebene des Gehäuses (14) entlang der Mittellängsachse der Spindel (12) verläuft, und dass, bezogen auf die Montagestellung des Linearantriebes (10), die Trennebene vertikal steht.

2. Elektromotorischer Linearantrieb nach Anspruch 1, **dadurch gekennzeichnet, dass** die Gleitbahnen sich zumindest über den Bewegungsbereich der Spindelmutter (13) erstrecken und dass die Gehäuseteile (14a, 14b) des Gehäuses (14) an den freien, dem Antriebsmotor (11) abgewandten Enden Ausformungen (24, 25) zur Lagerung des freien Endes der Gewindespindel (12) aufweisen und dass das freie Ende der Gewindespindel (12) in einem Lagersitz der Ausformungen (24, 25) der Gehäuseteile (14a, 14b) gelagert ist, wobei das freie Ende der Gewindespindel (12) in einem in eine Bohrung der Gehäuseteile (14a, 14b) des Gehäuses (14) fest aufgesetzte Gleitlagerbuchse (31) gelagert ist.

3. Elektromotorischer Linearantrieb nach einem oder mehreren der vorstehenden Ansprüche, **dadurch gekennzeichnet, dass** die Spindelmutter (13) als Hohlkörper ausgebildet ist und eine mittig zwischen den Längskanten liegende Innengewindehülse aufweist, deren Gewindegänge mit den Gewindegängen der Spindel (12) in Eingriff stehen, und dass die einzelnen Hohlräume durch gitterförmig angeordnete Versteifungsrippen gebildet sind, die sich in Längs- und Querrichtung der Spindelmutter (13) erstrecken.

4. Elektromotorischer Linearantrieb nach Anspruch 3, **dadurch gekennzeichnet, dass** die formschlüssige Verbindung zwischen der Spindelmutter (13) und den Gehäuseteilen (14a, 14b) des Gehäuses durch parallel und im Abstand zueinander verlaufende Führungsnuten (15, 16) und darin eingreifende Führungsstege (17, 18) gebildet ist.

5. Elektromotorischer Linearantrieb nach einem der Ansprüche 1 bis 4, **dadurch gekennzeichnet, dass** in mindestens einem Gehäuseteil (14a, 14b) des Gehäuses (14) eine Führungsnut (15, 16) und/oder ein Führungssteg vorgesehen ist, und dass die Spindelmutter Führungsstege (17, 18) und/oder Führungsnuten aufweist.

6. Elektromotorischer Linearantrieb nach einem oder mehreren der vorstehenden Ansprüche, **dadurch gekennzeichnet, dass** Führungsstege und/oder Führungsnuten des Gehäuses (14) und/oder der Spindelmutter (13) derart ineinander greifen, dass das Gehäuse (14) zumindest teilweise die Spindelmutter (13) umgreift oder teilweise in die Spindelmutter (13) eingreift.

7. Elektromotorischer Linearantrieb nach einem oder mehreren der vorstehenden Ansprüche, **dadurch gekennzeichnet, dass** an den Längseiten der Spindelmutter (13) Anschlusslaschen (34, 35) als Eingangsglied eines Verstellbeschlages des Möbels ansetzbar sind.

8. Elektromotorischer Linearantrieb nach einem oder mehreren der vorstehenden Ansprüche, **dadurch gekennzeichnet, dass** an der dem Gehäuse (14) abgewandten Seite eine die Spindel abdeckender Abdeckstreifen (19) vorgesehen ist, wobei der Abdeckstreifen (19) die Spindel (12) beidseitig überragt.

9. Elektromotorischer Linearantrieb nach einem oder mehreren der vorstehenden Ansprüche, **dadurch gekennzeichnet, dass** das Antriebsglied (29) des Drehzahlreduziergetriebes als Rotationskörper, vorzugsweise als Schneckenrad ausgebildet ist, wobei der Rotationskörper mit der Spindel (12) formschlüssig verbunden ist.

10. Elektromotorischer Linearantrieb nach einem oder mehreren der vorstehenden Ansprüche, **dadurch gekennzeichnet, dass** die Endstellungen der Spindel (12) durch Endschalter (32, 33) begrenzt sind oder dass die Endstellungen der Spindel (12) durch ortsfeste Anschläge begrenzt ist, so dass bei Überschreiten eines bestimmten Wertes des Motorstromes mittels eines Überstromes der Antriebsmotor vorzugsweise durch ein Überstromrelais oder eine Poly-Switeh-Sicherung abschaltbar ist.

11. Elektromotorischer Linearantrieb nach einem oder mehreren der vorstehenden Ansprüche, **dadurch gekennzeichnet, dass** das Gehäuse (14) bzw. die Gehäuseteile (14a, 14b) mit eingeformten Taschen zur Aufnahme von Befestigungselementen wie Muttern (36), Gewindeeinsätzen, Schrauben und dergleichen ausgestattet ist.

12. Elektromotorischer Linearantrieb nach einem oder mehreren der vorstehenden Ansprüche, **dadurch gekennzeichnet, dass** das Gehäuse (14) ablängbar ausgebildet ist, wobei das Gehäuse (14) des elektromotorischen Linearantriebes (10) an seiner äußeren und/oder inneren Seite nach Art einer Verzahnung ausgebildet ist, dass in diese Verzahnung Verbindungselemente eingreifbar sind, so dass ein weiteres Gehäuseteil mit einer Endkappe verbindbar ist, die vorzugsweise mehrteilig ausgebildet ist und ein Lager für das freie Ende der Spindel (12) aufweist, und dass die Endkappe zumindest abschnittweise in die Verzahnung des Gehäuses (14) eingreift.

13. Elektromotorischer Linearantrieb nach einem oder mehreren der vorstehenden Ansprüche, **dadurch gekennzeichnet, dass** das Gehäuse (14) im Innenraum eine Kammer aufweist, in der die elektrische Verdrahtung der elektrischen Bauteile unterbringbar ist.

14. Elektromotorischer Linearantrieb nach einem oder mehreren der vorstehenden Ansprüche, **dadurch gekennzeichnet, dass** zumindest ein Gehäuseteil (14a, 14b) wenigstens einen Abschnitt aufweist, in dem ein Endschalter (32, 33) formschlüssig einsetzbar ist, wobei der mindestens eine Endschalter (32, 33) in eine rahmenartige Einfassung eingesetzt ist und wobei die rahmenförmige Einfassung (37) mit Durchbrüchen oder Vorsprüngen versehen ist, welche mit äußeren Abschnitten des jeweiligen Endschalters (32, 33) korrespondieren.

15. Elektromotorischer Linearantrieb nach einem oder mehreren der vorstehenden Ansprüche, **dadurch gekennzeichnet, dass** zumindest einem Endschalter (32, 33) ein Betätigungselement zugeordnet ist, und welches zur Schaltung des Endschalters (32, 33) von der Spindelmutter betätigbar ist, wobei das Betätigungselement nach Art eines Schiebers (39) ausgebildet ist, und an Führungselementen des Gehäuses (14) entlang dem Bewegungsbereich der Spindelmutter (13) geführt ist.

16. Elektromotorischer Linearantrieb nach Anspruch 15, **dadurch gekennzeichnet, dass** der Schieber (39) eine Mitnahmeeinrichtung aufweist, die mit der Spindelmutter (13) formschlüssig gekoppelt ist, dass mittels der Mitnahmeeinrichtung durch eine mechanische Belastung bedingte Form- und Lagetoleranzen als auch Fertigungstoleranzen ausgleichbar sind.

17. Elektromotorischer Linearantrieb nach Anspruch 15, **dadurch gekennzeichnet, dass** die Endschalter (32, 33) Bohrungen oder abstehende Abschnitte aufweisen, die als elektrische Anschlüsse ausgebildet sind.

18. Elektromotorischer Linearantrieb nach einem oder mehreren der vorstehenden Ansprüche, **dadurch gekennzeichnet, dass** die Endschalter (32, 33) in jeweils einen Halter festgesetzt sind, dessen Wandung an der dem Stößel abgewandten Seite mit wenigstens einem Langloch oder einer Lochreihe versehen ist.

## Claims

1. Electromotive linear drive (10), in particular for adjusting components of an item of furniture, having a plastic housing (14) which is produced by injection moulding, a drive motor (11, 29) and having at least one spindle (12) which can be driven in rotation and on which in each case a block-like spindle nut (13) which is secured against rotation is mounted, the said spindle nut at least partially surrounding the housing (14) and/or at least partially engaging in the housing, **characterized in that** the housing (14) is composed of two housing parts (14a, 14b) and has sliding paths for the spindle nut (13), **in that** at least the threads of the spindle (12) are arranged outside the housing (14), **in that** the housing parts (14a, 14b) have the same or a similar cross section and are preferably in the form of a tray, **in that** the separating plane of the housing (14) runs along the centre longitudinal axis of the spindle (12), and **in that** the separating plane is vertical in relation to the mounting position of the linear drive (10).

2. Electromotive linear drive according to Claim 1, **characterized in that** the sliding paths extend at least over the movement region of the spindle nut (13), and **in that** the housing parts (14a, 14b) of the housing (14) have, at the free ends which are averted from the drive motor (11), shaped portions (24, 25) for supporting the free end of the threaded spindle (12), and **in that** the free end of the threaded spindle (12) is supported in a bearing seat of the shaped portions (24, 25) of the housing parts (14a, 14b), with the free end of the threaded spindle (12) being supported in a sliding bearing bush (31) which is fixedly mounted in a bore in the housing parts (14a, 14b) of the housing (14).

3. Electromotive linear drive according to either or both of the preceding claims, **characterized in that** the spindle nut (13) is in the form of a hollow body and has an internal threaded sleeve which is situated centrally between the longitudinal edges and of which the threads engage with the threads of the spindle (12), and **in that** the individual hollow spaces are formed by reinforcing ribs which are arranged in a grid-like manner and extend in the longitudinal and transverse direction of the spindle nut (13).

4. Electromotive linear drive according to Claim 3, **characterized in that** the interlocking connection between the spindle nut (13) and the housing parts (14a, 14b) of the housing is formed by guide grooves (15, 16), which run parallel and at a distance from one another, and guide webs (17, 18), which engage in the said guide grooves.

5. Electromotive linear drive according to one of Claims 1 to 4, **characterized in that** a guide groove (15, 16) and/or a guide web is provided in at least one housing part (14a, 14b) of the housing (14), and **in that** the spindle nut has guide webs (17, 18) and/or guide grooves.

6. Electromotive linear drive according to one or more of the preceding claims, **characterized in that** guide webs and/or guide grooves of the housing (14) and/or of the spindle nut (13) engage in one another in such a way that the housing (14) at least partially surrounds the spindle nut (13) or partially engages in the spindle nut (13).

7. Electromotive linear drive according to one or more of the preceding claims, **characterized in that** connection lugs (34, 35) can be attached to the longitudinal sides of the spindle nut (13) as an input element of an adjustment fitting of the item of furniture.

8. Electromotive linear drive according to one or more of the preceding claims, **characterized in that** a covering strip (19) which covers the spindle is provided on that side which is averted from the housing (14), with the covering strip (19) projecting beyond the spindle (12) on both sides.

9. Electromotive linear drive according to one or more of the preceding claims, **characterized in that** the drive element (29) of the rotation speed-reducing gear mechanism is in the form of a rotary body, preferably in the form of a worm gear, with the rotary body being connected to the spindle (12) in an interlocking manner.

10. Electromotive linear drive according to one or more of the preceding claims, **characterized in that** the end positions of the spindle (12) are limited by end switches (32, 33), or **in that** the end positions of the spindle (12) are limited by stationary stops, so that the drive motor can preferably be switched off by an overcurrent relay or a polyswitch protection device when a specific value of the motor current is exceeded by means of an overcurrent.

11. Electromotive linear drive according to one or more of the preceding claims, **characterized in that** the housing (14) or the housing parts (14a, 14b) is/are equipped with integrally formed pockets for accommodating fastening elements such as nuts (36), threaded inserts, screws and the like.

12. Electromotive linear drive according to one or more of the preceding claims, **characterized in that** the housing (14) can be cut to length, with the housing (14) of the electromotive linear drive (10) being in the form of a kind of tooth system on its outer and/or inner side, **in that** connecting elements can engage in this tooth system so that a further housing part can be connected to an end cap which is preferably multipartite and has a bearing for the free end of the spindle (12), and **in that** at least sections of the end cap engage in the tooth system of the housing (14).

13. Electromotive linear drive according to one or more of the preceding claims, **characterized in that** the housing (14) has a chamber in the interior, it being possible for the electrical wiring of the electrical components to be accommodated in the said chamber.

14. Electromotive linear drive according to one or more of the preceding claims, **characterized in that** at least one housing part (14a, 14b) has at least one section in which an end switch (32, 33) can be inserted in an interlocking manner, with the at least one end switch (32, 33) being inserted into a frame-like holding means, and with the frame-like holding means (37) being provided with apertures or projections which correspond to external sections of the respective end switch (32, 33).

15. Electromotive linear drive according to one or more of the preceding claims, **characterized in that** an operating element is associated with at least one end switch (32, 33) and can be operated by the spindle nut to switch the end switch (32, 33), with the operating element being in the form of a kind of slide (39) and being guided along the movement region of the spindle nut (13) on guide elements of the housing (14).

16. Electromotive linear drive according to Claim 15, **characterized in that** the slide (39) has a driver device which is coupled to the spindle nut (13) in an interlocking manner, **in that** shape and position tolerances resulting from mechanical loading and also manufacturing tolerances can be compensated for by means of the driver device.

17. Electromotive linear drive according to Claim 15, **characterized in that** the end switches (32, 33) have bores or projecting sections which are in the form of electrical connections.

18. Electromotive linear drive according to one or more of the preceding claims, **characterized in that** the end switches (32, 33) are in each case fixed in a holder, the wall of the said holder being provided with at least one elongate hole or a row of holes on that side which is averted from the tappet.

## Revendications

1. Entraînement linéaire (10) à moteur électrique, en particulier pour le réglage des éléments d'un meuble, comportant un boîtier (14) réalisé en matière plastique par le procédé de moulage par injection, un moteur d'entraînement (11, 29) et comportant au moins une broche (12) propre à être entraînée en rotation, sur laquelle est posé un écrou de broche (13) immobilisé en rotation, qui est réalisé en forme de bloc et qui enserre au moins partiellement le boîtier (14) et/ou s'engage au moins partiellement dans ledit boîtier, **caractérisé en ce que** le boîtier (14) est formé de deux parties (14a, 14b) et comporte des voies de glissement pour l'écrou de broche (13), **en ce qu'**au moins les pas de vis de la broche (12) sont situés en dehors du boîtier (14), **en ce que** les parties (14a, 14b) du boîtier ont une section identique ou similaire et sont configurées de préférence en forme de coques, **en ce que** le plan de séparation du boîtier (14) s'étend le long de l'axe longitudinal médian de la broche (12), et **en ce que** le plan de séparation est positionné verticalement par rapport à la position de montage de l'entraînement linéaire (10).

2. Entraînement linéaire à moteur électrique selon la revendication 1, **caractérisé en ce que** les voies de glissement s'étendent au moins sur la zone de mouvement de l'écrou de broche (13) et **en ce que** les parties (14a, 14b) du boîtier (14), sur leurs extrémités libres, opposées au moteur d'entraînement (11), comportent des façonnages en relief (24, 25) pour le montage de l'extrémité libre de la broche filetée (12), et **en ce que** l'extrémité libre de la broche filetée (12) est logée dans un logement des façonnages en relief (24, 25) des parties (14a, 14b) du boîtier, l'extrémité libre de la broche filetée (12) étant logée dans un coussinet lisse (31) monté de manière fixe dans une forure des parties (14a, 14b) du boîtier (14).

3. Entraînement linéaire à moteur électrique selon une ou plusieurs des revendications précédentes, **caractérisé en ce que** l'écrou de broche (13) est réalisé sous forme de corps creux et comporte un manchon fileté intérieur, qui est situé au milieu entre les bords longitudinaux et dont les pas de vis engrènent avec les pas de vis de la broche (12), et **en ce que** les différentes cavités sont formées par des ailettes de renfort, qui sont disposées en forme de grille et s'étendent dans la direction longitudinale et la direction transversale de l'écrou de broche (13).

4. Entraînement linéaire à moteur électrique selon la revendication 3, **caractérisé en ce que** l'assemblage par conjugaison de forme entre l'écrou de broche (13) et les parties (14a, 14b) du boîtier est formé par des rainures de guidage (15, 16), disposées parallèlement et à distance les unes des autres, et des nervures de guidage (17, 18), s'insérant dans ces dernières.

5. Entraînement linéaire à moteur électrique selon l'une quelconque des revendications 1 à 4, **caractérisé en ce qu'**une rainure de guidage (15, 16) et/ou une nervure de guidage est prévue dans au moins une partie (14a, 14b) du boîtier (14), et **en ce que** l'écrou de broche comporte des nervures de guidage (17, 18) et/ou des rainures de guidage.

6. Entraînement linéaire à moteur électrique selon une ou plusieurs des revendications précédentes, **caractérisé en ce que** les nervures de guidage et/ou les rainures de guidage du boîtier (14) et/ou de l'écrou de broche (13) s'engagent les unes dans les autres de telle sorte que le boîtier (14) enserre au moins partiellement l'écrou de broche (13) ou s'engage partiellement dans l'écrou de broche (13).

7. Entraînement linéaire à moteur électrique selon une ou plusieurs des revendications précédentes, **caractérisé en ce que** des pattes d'accouplement (34, 35), formant un organe d'entrée d'une ferrure de réglage du meuble, peuvent être montées sur les côtés longitudinaux de l'écrou de broche (13).

8. Entraînement linéaire à moteur électrique selon une ou plusieurs des revendications précédentes, **caractérisé en ce que** sur le côté opposé au boîtier (14), il est prévu une bande de recouvrement (19) qui recouvre la broche, ladite bande de recouvrement (19) s'avançant de part et d'autre au-delà de la broche (12).

9. Entraînement linéaire à moteur électrique selon une ou plusieurs des revendications précédentes, **caractérisé en ce que** l'organe d'entraînement (29) du réducteur de vitesse de rotation est réalisé sous forme de corps rotatif, de préférence du type roue hélicoïdale, le corps rotatif étant assemblé par conjugaison de forme avec la broche (12).

10. Entraînement linéaire à moteur électrique selon une ou plusieurs des revendications précédentes, **caractérisé en ce que** les positions finales de la broche (12) sont délimitées par des commutateurs de fin de course (32, 33) ou **en ce que** les positions finales de la broche (12) sont délimitées par des butées fixes, de telle sorte que lorsque le courant du moteur est supérieur à une valeur déterminée, la déconnexion peut être effectuée au moyen d'un courant de surcharge du moteur d'entraînement, de préférence par l'intermédiaire d'un relais de courant de surcharge ou d'un fusible réarmable.

11. Entraînement linéaire à moteur électrique selon une ou plusieurs des revendications précédentes, **caractérisé en ce que** le boîtier (14), plus précisément les parties (14a, 14b) du boîtier, est muni de poches, formées dans celui-ci et destinées à recevoir des éléments de fixation, tels que des écrous (36), des inserts filetés, des vis et tout élément similaire.

12. Entraînement linéaire à moteur électrique selon une ou plusieurs des revendications précédentes, **caractérisé en ce que** le boîtier (14) est réalisé de manière sectionnable en longueur, le boîtier (14) de l'entraînement linéaire (10) à moteur électrique étant réalisé sur son côté extérieur et/ou intérieur sous la forme d'une denture, **en ce que** des éléments de liaison peuvent engrener dans ladite denture, de telle sorte qu'une autre partie de boîtier peut y être assemblée avec un cache d'extrémité, qui est réalisé de préférence en plusieurs parties et comporte un palier pour l'extrémité libre de la broche (12), et **en ce que** le cache d'extrémité engrène au moins par zones dans la denture du boîtier (14).

13. Entraînement linéaire à moteur électrique selon une ou plusieurs des revendications précédentes, **caractérisé en ce que** le boîtier (14) comporte à l'intérieur une chambre, dans laquelle peut être logé le câblage électrique des composants électriques.

14. Entraînement linéaire à moteur électrique selon une ou plusieurs des revendications précédentes, **caractérisé en ce qu'**au moins une partie (14a, 14b) du boîtier comporte au moins un tronçon dans lequel un commutateur de fin de course (32, 33) peut être enfiché par conjugaison de forme, ledit au moins un commutateur de fin de course (32, 33) étant inséré dans un cadre de type châssis et le cadre (37) de type châssis étant muni de trous débouchants ou saillies, qui correspondent avec des tronçons extérieurs du commutateur de fin de course (32, 33) concerné.

15. Entraînement linéaire à moteur électrique selon une ou plusieurs des revendications précédentes, **caractérisé en ce qu'**à au moins un commutateur de fin de course (32, 33) est associé un élément d'actionnement, qui peut être actionné par l'écrou de broche pour la commutation du commutateur de fin de course (32, 33), l'élément d'actionnement étant réalisé sous la forme d'un curseur (39) et étant guidé sur des éléments de guidage du boîtier (14) le long de la zone de mouvement de l'écrou de broche (13).

16. Entraînement linéaire à moteur électrique selon la revendication 15, **caractérisé en ce que** le curseur (39) comporte un entraîneur, qui est couplé par conjugaison de forme avec l'écrou de broche (13), **en ce que** des tolérances de forme et de position, de même que des tolérances de fabrication peuvent être compensées par l'entraîneur.

17. Entraînement linéaire à moteur électrique selon la revendication 15, **caractérisé en ce que** les commutateurs de fin de course (32, 33) comportent des forures ou des parties saillantes qui sont réalisées sous forme de raccords électriques.

18. Entraînement linéaire à moteur électrique selon une ou plusieurs des revendications précédentes, **caractérisé en ce que** les commutateurs de fin de course (32, 33) sont fixés chacun dans un support, dont la paroi, sur le côté opposé au poussoir, est munie d'au moins un trou oblong ou d'une série de trous.
